# EUROPEAN PATENT APPLICATION

(11) **EP 2 000 924 A1**
(43) Date of publication of application: **10.12.2008**
(21) Application number: 07010933.5
(22) Date of filing: 04.06.2007
(51) Int. Cl.: G06F 17/30

(54) **Electronic device with web browser**

(71) Applicant: Koninklijke KPN N.V., 2516 CK The Hague (NL)
(72) Inventor: Van Steenbergen, Ate Sander, 9737 NN Groningen (NL)
(74) Representative: Wuyts, Koenraad Maria

(57) **Abstract**

A handheld electronic device with a browser and Internet access stores a set of URLs in its memory. The device has an operational mode wherein the Web pages, associated with the URLs, are retrieved, and are automatically rendered one after the other in the device's browser. The user or service provider can configure the automatic rendering of this browsing sequence.

## Description

### FIELD OF THE INVENTION

The invention relates to an electronic device having a Web browser, to a method of providing a browsing service, and to software for configuring an electronic device that has a Web browser. The invention is of particular interest to mobile devices.

### BACKGROUND ART

US published patent application 20030058271, incorporated herein by reference, discloses a system and method for sequentially displaying content contained in a series of datasets. In an example embodiment, the system comprises an Internet browser executing in a presentation device, at least one portion of the Internet browser being adapted to interpret meta-tags; a plurality of memory regions, each memory region corresponding to one of a plurality of frames for display on the presentation device, each frame being selectively enabled with at least one frame being a selectively hidden frame; a plurality of datasets, each dataset comprising data processable for presentation; and software executing at the source, capable of generating one or more formatted page files, each page file processable by the Internet browser, each page file comprising Internet browser directives comprising a dataset identifier, a content data file associated with the dataset, at least one refresh meta-tag to instruct the Internet browser to download a predetermined next dataset of the plurality of datasets for presentation; and at least one refresh meta-tag containing a timing value. Accordingly, the approach taken in US published patent application 20030058271 requires Web pages to be provided with meta-tags and the browser to be configured so as to be able to operate on the tags in order to implement a sequential showing of content information. The tag associated with one page determines the next page.

US patent 6,381,637, incorporated herein by reference, discloses an information apparatus which has access means, by which a document on the Internet is accessed, and automatic Web tracing means, which automatically trace link destinations successively according to a predetermined rule and parameters based on the link information which is set in the accessed document. The predetermined rule is either a depth-first search or a width-first search. The predetermined parameters include at least a link-depth limit to be used when the link destinations are traced downward in the hierarchy, an interval of time required for a transit from one document to another, and an automatic Web tracing time-out time. The rule and parameters may be specified by a user. Automatic Web tracing may be performed either on-line or off-line. Thus, time-varying information can passively be received as if it were television information, minimizing operation steps necessary for a user to perform the automatic Web browsing of the Internet.

The apparatus of US patent 6,381,637 enables an automatic Web browsing function. The apparatus comprises access means for accessing documents on the Internet; storage means for storing data of the accessed documents; and automatic Web tracing means for sequentially and automatically tracing link destinations according to a predetermined rule and parameters based on link information defined in the documents stored in the storage means. Even a user with no computer knowledge or operation experience can automatically browse the Web on the Internet continuously in much the same manner the user watches the television without cumbersome operations. The user may specify a navigation direction, a link depth, a time interval, a time-out time. The navigation direction specifies, when there is a plurality of links in a page, whether the first link in each page is to be sequentially traced first or all the link destinations of the links in one page are to be traced first. The former is called a depth-first search, while the latter is called a width-first search. The link depth is used to specify the maximum number of times the links are to be traced sequentially into lower hierarchies. The time interval is used to specify the period of time (in seconds) from the moment one page is displayed to the time the display is switched to the next page. The time-out time is used to specify the auto-navigation duration time (in minutes). When the time expires, auto-navigation ends. Accordingly, the approach taken in US patent 6,381,637 is based on the local topology of the Web pages. That is, the automatic browsing follows the paths determined by the links contained in the page currently open in the browser. This configuration is intended to help the uninitiated with surfing the Web via a TV set.

US published patent application 20040201614, herein incorporated by reference, discloses an apparatus for accessing bookmarked Web pages without opening a bookmark folder. The apparatus uses a next and a previous icon to access the bookmarked Web pages. When a Web page is being bookmarked, it can be chosen to be part of a route (i.e., a string of bookmarks to be successively accessed) or not. If it is part of a route, the bookmarked Web page may be accessed without opening the bookmark folder by using either the next or the previous icon.

As known, a bookmark is a feature that is available in most Web browsers that allows a user to save addresses or URLs (abbreviation for Uniform Resource locators) of Web pages into a folder (i.e., a bookmark folder) for later re-visitation. A Web browser is a software application that is used to locate and display Web pages. To bookmark a page, the bookmark folder has to be opened. In Netscape Navigator, a user has to click once on a bookmark icon and in Internet Explorer the user has to click once on a Favorites icon to open the bookmark folder. When a user asserts "add to Favorites", and then an "OK" button, the page is bookmarked, i.e., the URL is saved in the bookmark folder.

The graphical user interface (GUI) of US published patent application 20040241614 used for bookmarking a Web page has an added function. The added function is a route bookmark function that can be accessed using a "route bookmark" button added to the conventional GUI for bookmarking Web pages. When the user asserts the "route bookmark" button, the URL of the Web page is stored into a list of URLs that can be accessed without opening the bookmark folder. The GUI of the browser has the usual "back" button and the usual "forward" button to navigate between the Web pages accessed according to the browsing history during a browsing session. This GUI also has a "previous" button and a "next" button to navigate between Web pages in a list, if the currently opened page belongs to this list. The route-bookmarked Web pages are accessed in the order wherein they were bookmarked and based on which one of the route bookmarked Web page has last been accessed when the "previous" icon and the "next" icon are asserted. Thus, a user while displaying a route-bookmarked Web page may access any other Web page. But when the "previous" icon is asserted, the route-bookmarked Web page that was displayed before the last displayed route-bookmarked Web page will be reaccessed. Similarly, when the "next" icon is asserted, the route-bookmarked Web page that comes after the lastly displayed route-bookmarked Web page will be accessed.

When the bookmark folder is accessed in the system of US published patent application 20040201614, a list of the bookmarked Web pages is displayed. The list comprises both types of Web pages: the regularly bookmarked Web pages and route-bookmarked Web pages. When the "next" icon is asserted for the first time, the route-bookmarked Web page occurring first in the list will be accessed and displayed. The second time the "next" icon is asserted, the route-bookmarked page that occurs in the list after the first route-bookmarked Web page will be accessed and displayed and so on. If the route-bookmarked Web page that is third in the list was last displayed and the "previous" icon is asserted, the route-bookmarked Web page that occurs second in the list will be displayed etc. If a user ever wants to change the order in which the bookmarked Web pages in the route are accessed and displayed, the user needs only change the order of the bookmarked Web pages in the route using, for example, the cut and paste feature of the browser. This changes the overall order of the Web pages in the list displayed. As a result, organizing bookmarks, e.g., alphabetically or according to, topic, is then not possible anymore.

A user of the system in US published patent application 20040201614 may have as many bookmark routes as desired. In this case, the user may have to name each bookmark route. Thus, when the bookmark folder is opened, the name of the routes will be displayed as regular bookmarks. Alternatively, they may be highlighted in some fashion as an indication that they are bookmark routes. In any case, when the user clicks on one of the route bookmarks, then the chain of bookmarks for that route will be displayed. To navigate through that bookmark route, the user needs only click on one of the bookmarked Web pages in the route. After accessing and displaying the bookmarked Web page, the user may use the "previous" icon and the "next" icon to access the other bookmarked Web pages in the route. When the user wants to navigate through another route, the user may simply open the bookmark folder and click on another route. When the string of the bookmarked Web pages for that route is displayed, the user may click on one of the bookmarked Web pages to access and display that page. Then, as before, the user may use the "previous" icon and the "next" icon to access the other bookmarked Web pages in the new route.

### SUMMARY OF THE INVENTION

The approach taken in US published patent application 20040201614 has some drawbacks. First, changing the order of Web pages in a route affects the organization of the bookmarks in the bookmarks list when displayed in the bookmark editing window. Second, the known approach is embedded in the bookmarking functionality and, as a result, is restricted to bookmarked pages. A large series of URLs to browse through sequentially would seriously degrade the function of organized favorites in the bookmarks folder. Third, the user interface of the browser has, in addition to the conventional "back" button and the conventional "forward" button for navigating according to access history, the "previous" icon and the "next" icon for navigating according to the pre-determined route. This may be confusing to the user and also clutters the display screen and takes up precious screen realestate (i.e., display area), which is especially relevant to mobile devices with Internet access.

The invention provides an electronic device comprising an interface for data communication via a data network and a browser for rendering content information items provided by one or more servers on the data network. Different ones of the content information items are identifiable through different URLs. The device has a control system for control of the browser. The control system is operative to cause the browser to retrieve multiple specific ones of the items under control of a set of URLs. The set of URLs is determined in advance and is independent of the topology of the Web. The control system is operative to implement an automatic sequential browsing functionality by means of automatically supplying to the browser commands one after another to render the specific items one after another in a user interface.

The device of the invention has an operational mode wherein a browsing sequence is automatically implemented. The device preferably has a button or other user input to stop and resume the automatic sequence so that the user can scan, at his or her leisure, the item currently being rendered. Especially if the device is a hand-held device with a display monitor, the user interface has to be designed with care so as to not unnecessarily occupy precious screen real estate (display area) and to not confuse the user. Being in an automatic browse function, the buttons or hot keys are context aware. That is, the scroll button is still a scroll button, but other buttons act on the automatic browse session (e.g., stop, resume, branch as will be explained further below). This keeps the user interface intuitive and simple.

The invention enables a user of a handheld electronic device with a browser and Internet interface to store the URLs of his/her favorite Web pages and/or other Web pages in the device. The device has an operational mode wherein the Web pages are retrieved, associated with the URLs stored, and are rendered one after the other in the device's user interface. As a result, the topology used in the browsing of the invention is independent of the topology imposed on the Web pages by means of their links or URLs. To clarify this, consider the following. A Web page may contain one or more links to other Web pages that in turn each comprise one or more links to yet further Web pages, and so on. This linking among Web pages imposes a connectedness on the pages (or: topology). The Web pages thus form a topological space that is generally referred to as the World-Wide Web or simply "the Web". On the other hand, the browsing sequence in the invention can be determined by the user of the device. For example, the user manually stores a plurality of URLs in a memory at the device, or a service provider stores a plurality of URLs in the memory, e.g., via an uploading process over the Internet or via providing a physical storage medium for inserting into the device, etc. For practical use of the invention, the information content of the Web pages, associated with these URLs, is typically not static and may change e.g., hourly, daily or weekly or as events warrant such as the Web pages of the BBC or CNN dealing with global and/or local news, or such as the Web pages dealing with weather forecasts and weather radar images.

Note that US patent 6,381,637 discloses an automated Web browsing functionality that operates on a set of URLs that are supplied as hyperlinks in a Web page. In the invention, the URLs are supplied in a set independent of the Web's topology. That is, they are preferably not supplied as hyperlinks embedded in a publicly accessible Web page, but as a list of data. The format wherein the set of URLs is available is not important to the functionality of the invention, as long as the device's control system can interpret them as URLs. For efficiency of processing and/or storage of the URLs, the set of one or more URLs can be supplied as a set of one or more data strings, each particular string representing a particular URL. Also note that the URLs given in a Web page may be subject to change without advance notice, so that it is not known beforehand whether a URL in the page refers to another Web page that is still active. It is also not known whether the user would even like to see these other pages. Accordingly, the hyperlinks are not known a priori which can lead to unpredictable or even unwanted effects.

In an embodiment of the invention, at least a particular URL of the set of URLs has been programmed into the device by a supplier of the device, e.g., the manufacturer or service provider. These pre-programmed URLs may support a sponsored business model for supply of the device and the accompanying services.
In a further embodiment, at least one of the following aspects of the control system is configurable: respective time periods for rendering respective ones of the specific items; the sequence wherein the specific items are rendered; and the set of URLs. The control means may be user-configurable through the user interface. Alternatively, or in addition, the control means may be configurable via the interface for data communication via the network, e.g., by a service provider or the supplier.

For example, the browser control module is configurable with respect to the length of a respective time period during which the browser is to render a respective one of the specific multiple Web pages. The user or the service provider may specify that a first particular one of the specific multiple Web pages is being displayed for a first time period and a second particular one of the specific multiple Web pages for a second time period, wherein the first and second time periods have different lengths. As another example, the browser control module is configurable with respect to the set of the URLs. The user may manually put together the set by selecting particular URLs and having them stored in the memory. The set of URLs of the Web pages to be rendered one after another can be included in a larger set of URLs, also available. Two or more sets of URLs can be available and the browser control module can be configured to select which one of the sets of URLs is to be processed by the browser for rendering the corresponding ones of the specific Web pages one after the other in the user interface. Different sets may relate to different topical issues, e.g., news, science, pre-war Bentleys for sale, etc. Alternatively, the user may put together for the rendering process the set of URLs from the larger set of URLs. In yet a further example of configuring the browser control module, the configuring is carried out dynamically during the rendering process, e.g., upon a user input to the device. In this manner, the length of the rendering time periods can be re-adjusted dynamically, or the rendering process may branch from one set of URLs to another set of URLs dynamically. As to this latter option, assume that different ones of the URLs of a first set of URLs relate to Web pages addressing different topics: news, sports, weather, humor, etc. The browser will render these pages one after the other, in a random sequence, cyclically or in the given order once per user input. If the user now provides a specific user input during the time period wherein, e.g., the humor page is being rendered, the browser control module branches to a new set of URLs of pages all dealing with humor and has the browser render these humor pages in a random sequence, cyclically, or in a specific order only once. Within this context, the process after the branching may be implemented using the technology disclosed in US patent 6,381,637 discussed above. Alternatively, the process after the branching is based on the same approach as before the branching. That is, each page and sequence is known in advance and has been individually selected for being included in the automatic sequential browsing of the invention. Accordingly, at a first level in a hierarchy of levels, the user has specified the browsing sequence, and at the next one or more levels, the browsing sequence is determined by the local topology of the Web itself. Different variations and combinations can be made according to this theme. As yet another example, the browser control module is configurable with respect to an order of rendering the specific multiple Web pages. The user may specify that certain URLs of the set be skipped in the rendering process, or that the browser is to render the pages associated with the set in a random order, or in a specific order only once or cyclically, etc. As yet another example, a set of URLs that can be used for the browsing sequence in the invention is the set of URLs in the "favorites" folder of Internet Explorer. As still another example, a set of URLs that can be used for the browsing sequence in the invention is the set that is automatically compiled from the URLs that have been most frequently visited by the user when manually browsing the Web, e.g., for the last week or for a past length of time that can be specified by the user when configuring the device. In the latter embodiment, the history of Web accesses does not take into account the accesses during the sequential browsing. Accordingly, the device discriminates between the automatic browsing mode of the invention on the one hand and the conventional manual browsing mode. Accesses can thus be labeled in the history file, as kept by the browser, as having occurred in one mode or the other so as to determine what accesses to consider when determining the set of the most frequently visited Web pages.
Preferably, configuring the control system is independent of editing a bookmarks folder of the browser of the device. That is, the sequential browsing in the invention is a software application separate of the bookmarks managing software application. Note that, in contrast, US published patent application 20040201614 discloses manual browsing that is operational within the bookmarks application. In the invention, non-bookmarked pages or a mix of user-bookmarked pages and non-bookmarked pages can be subjected to the automatic browsing operation. The invention is therefore preferably implemented as independent of the bookmarking application Another advantage of the invention is further that a user can switch between the sequential browsing application in a first window on he display monitor and the managing of bookmarks in another window without these applications interfering with one another. This enables to optimize the user interface for each of the applications, which is especially important for implementation on mobile devices.

In a further embodiment, the control means has an operational mode wherein a respective time period of rendering a respective one of specific items depends on a respective attribute of the respective specific item. An attribute comprises, e.g., a size of a respective electronic data file representative of the respective specific item; a number of images contained in the respective specific item; a ratio of a first area of text versus a second area of images of the respective item when displayed; a presence of one or more keywords present in the respective specific item and matching a pre-determined user profile, etc. As to the latter option, the user profile can be stored at the device and a piece of software at the device attempts to match the profile with the current item being rendered or the next item to be rendered if it has been pre-fetched. For example, if the user has declared in his/her profile that he/she is especially interested in Web pages with news about science, nature and technology, keywords representative of these categories may be searched for in the current or next (pre-fetched) web page of the automatic sequence so as to re-adjust the rendering time period accordingly. The attribute may also be user- defined. For example, an attribute can be the source of the item. Some servers provide items that are more interesting to the user than other servers. As another example, the user may prefer images over text and wants to see an image longer than a text.
In a further embodiment, the control system is operative to cause the browser to retrieve multiple further specific ones of the items under control of a further set of further URLs. The further set of further URLs is determined in advance and is independent of the topology of the Web. The control system is operative to implement an automatic sequential browsing functionality by means of automatically supplying to the browser further commands to render the further specific items automatically one after another in a user interface upon the device receiving a user input while the specific items are being rendered one after another. Preferably, the further set of further URLs fpor the next browsing sequence depends on a particular one of the specific items being rendered in the current browsing sequence at the moment when the device receives the user input.
Preferably, the device comprises a personal computer (PC) or a mobile electronic device such as a mobile telephone or a laptop PC or palmtop PC provided with a wireless interface to the data network. Mobile browsing is yet hampered by bandwidth restrictions, which affects the browsing experience as perceived by the user. In conventional browsing, in small-bandwidth environments, delays occur when the user selects the next page, e.g., by clicking a link in the Web page currently being displayed in the user interface of the mobile device. In the invention, on the other hand, the next Web page to be retrieved is known in advance, as the URLs of the set are known in advance. Accordingly, the next page as determined by the next URL in the set can already be retrieved (pre-fetched) and locally stored during the rendering (e.g., displaying) of the current Web page. Similarly, in the branching example discussed above, the multiple candidates for the next page to be rendered are known: the page belonging to the next URL of the first set or the first page belonging to the second set. Both could be retrieved in advance, and one of them can be ignored or overwritten later depending on whether the user continues at the same level or branches off to the next.
The invention also relates to a method of providing a service via a data network to an electronic device comprising an interface for data communication via the data network and a browser for rendering content information items provided by one or more servers on the data network. Different ones of the content information items are identifiable through different URLs. The method comprises providing a set of URLs to the device. The method comprises controlling the browser to retrieve multiple specific ones of the items under control of the set of URLs. The set of URLs is determined in advance and is, preferably, independent of the topology of the Web. The controlling comprises implementing an automatic sequential browsing functionality by means of automatically supplying to the browser commands one after another to render the specific items one after another in a user interface.
The set of URLs has been stored in a memory, e.g., at the device or at a specific server. If stored at the device, the set of URLs has been pre-programmed into the device, e.g., by the user or service provider, or is uploaded by, e.g., the service provider or downloaded by the user. Preferably, the controlling is configurable at least through the user interface or the interface for data communication. The controlling can be configured or re-configured, e.g., by the user or by the service provider. The user may configure or re-configure the control of the browser via a user interface at the device, or via communication with the service provider, e.g., over the Internet. The configuring may also be beyond the control of the user. The controlling is configurable with respect to, e.g., the length of a respective time period for rendering a respective one of the specific multiple Web pages, or with respect to the set of URLs, or with respect to an order of rendering the specific multiple Web pages. These examples have been discussed above under the device embodiments of the invention and are equally well applicable to the scenario, wherein one or more of the specified operations are under control of the service provider. In this distributed approach the user device can be a conventional device without an onboard control system, as the configuring has been delegated to a server. As another example, the controlling is configured or configurable to cause the browser to render a respective one of the specific multiple items, e.g., Web pages, for a respective length of time depending on a respective attribute of the respective specific one of the multiple items. Details hereof have been discussed under the device embodiments above.

In an embodiment, the controlling comprises providing a further set of further URLs. The further set of further URLs is determined in advance and is independent of the topology of the Web. The controlling comprises causing the browser to retrieve multiple further specific ones of the items under control of the further set of the further URLs. The controlling comprises implementing the automatic sequential browsing functionality by means of supplying to the browser further commands to render the further specific items automatically one after another in a user interface, upon the device receiving a user input while the specific items are being rendered one after another. Preferably, the further set of further URLs depends on a particular one of the specific items being rendered when the device receives the user input. Accordingly, the method provides a way of branching off the current browsing sequence using different sequences that are linked to one another, e.g., by topic (news items, humor items, science items, pre-war car items, etc.), modality (web pages, audio clips, video clips, still pictures, etc.), file type (html, pdf, exe, etc), etc. The invention also relates to software for installing on an electronic device that has an interface to a data network and a browser for rendering content information items provided by one or more servers on the data network. Different ones of the content information items are identifiable through different URLs. The software comprises first control instructions for retrieving a set of URLs. The software comprises second control instructions for the browser to retrieve multiple specific ones of the items under control of the set of URLs. The set of URLs is determined in advance and is independent of the topology of the Web. The software comprises third control instructions for implementing an automatic sequential browsing functionality by means of automatically supplying to the browser commands one after another to render the specific items one after another in a user interface. Embodiments of the software serve to implement aspects discussed above with reference to the method and the device.

The device of the invention, as supplied to the end-user, may have URLs onboard that have been pre-programmed by, e.g., a service provider or the hardware manufacturer, or another party, for the purpose of the automatic sequential browsing. Similarly, the software of the invention can include URLs pre-determined by the software provider or the service provider commercially exploiting the software.

What is discussed herein with respect to Web pages is similarly applicable to other content information items that are identifiable through URLs. Examples of such items are pdf files, audio files for downloading or streaming, video files for downloading or streaming, etc. What is relevant here is that the user can enjoy having a browser sequentially render content information items that are identifiable through respective URLs without user-intervention, wherein the URLs have been determined by the user, or by another party for the user, in advance.

For completeness, a further clarification is given below about the difference between the approach disclosed in US published patent application 2004021614 on the one hand, and the invention on the other hand. Bookmarks or favorites serve a purpose inherently different from the purpose of sequential browsing. Bookmarks serve to let the user store the access information to a Web page that is of interest to him/her, so that he/she can access this page later on without having to conduct an extensive search. Typically, the user organizes the bookmarks according to topic of the associated Web pages, and within a topic according to sub-topics and eventually according to some ranking, e.g., alphabetically, that lets the user find a specific bookmark in the bookmark folder without undue delay. Bookmarks thus organized do therefore not represent pages that a user is likely to navigate in succession. Bookmarks are often used to start a browsing session within a specific bookmarked Web page. Bookmarked pages thus form a linear array that the user is not likely willing to visit each time one after the other. This can be compared to the same manner wherein a dictionary or an encyclopedia is being used. Both provide alphabetically ordered lists of information items, and a user typically does not navigate linearly through the dictionary or encyclopedia until the word of interest has been found. Instead, the user is searching for a particular piece of information, more or less leaning on the random-access function of the bookmarks, and homes in on that Web page that might lead him/her to the information desired.

In the invention, on the other hand, the automatic sequential browsing is more representative of a path of URLs visited by the user in a browsing session, and is therefore akin to the manual browsing behavior of a user. This path of URLs could include a home page of one service and a plurality of URLs in this home page (e.g., BBC news home page, and then the sub-pages in the categories news about Europe, news about science and technology, news about nature, news about health, etc.) and then another home page and multiple links mentioned in this home page (e.g., a home page about pre-war cars offered for sale world-wide, and then the sub-pages about Bentleys, Lagondas, and Rileys). Note that, within the context of US published patent application 2004021614, it would not make sense to have the sub-pages bookmarked as well as the home page in order to implement the sequential browsing.

Also note that the user typically does not delete bookmarks, unless too many bookmarked pages have become inactive and the inoperative bookmarks start to clutter the bookmark folder. An automatic browsing sequence in the invention can be renewed whenever so desired without affecting the bookmarks.

Further note that the approach of US published patent application 2004021614 does not lend itself readily for implementing in a mobile device, owing to the relatively small display monitor. A user would find it rater cumbersome to manage the bookmark routes in the "favorites" folder.

### BRIEF DESCRIPTION OF THE DRAWING

The invention is explained in further detail, by way of example and with reference to the accompanying drawing, wherein:
Figs. 1 and 2 are block diagrams of a system in the invention.
Fig.3 is a diagram to explain the branching between sets of URLs.
Throughout the Figures, similar or corresponding features are indicated by same reference numerals.

### DETAILED EMBODIMENTS

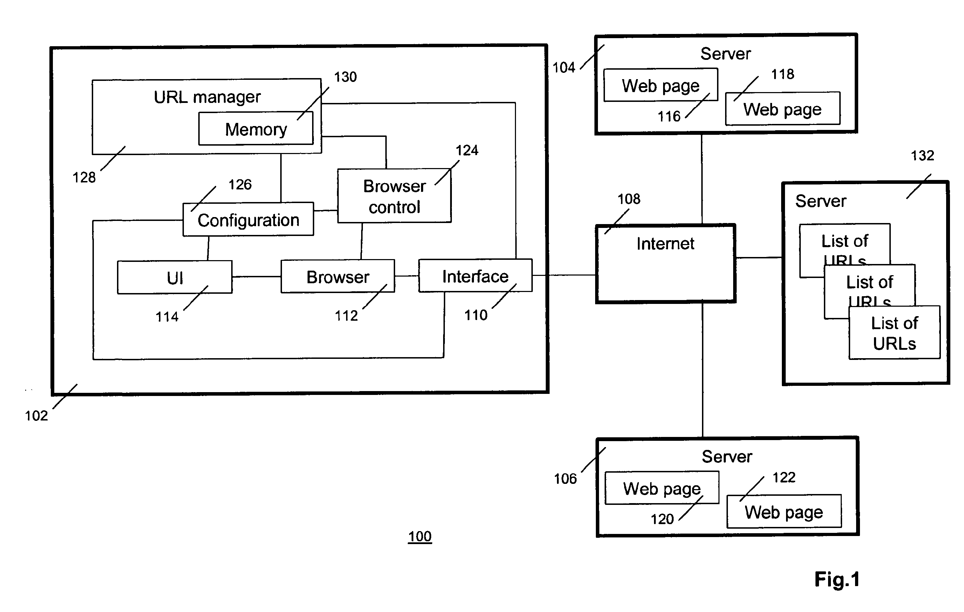

Fig.1 is a block diagram of a first data processing system 100 in the invention. System 100 comprises a user device 102 that is configured for communication with servers 104 and 106 over a data network 108. To this end, device 102 comprises an interface 110 for access to data network 108, a browser 112, and a user interface (UI) 114 for user interaction with browser 112 and for accessing Web pages 116, 118, 120 and 122 via their respective URLs. Device 102 can be, e.g., a personal computer (PC), a set-top box, a mobile telephone, etc.

In the invention, the functionality of browser 112 is enhanced in order to have the browser automatically retrieve a plurality of Web pages in a temporal sequence so that a single one of the pages is rendered in UI 114 for a certain time period, and then another one of the plurality of Web pages is rendered in UI 114 for a certain period of time, etc. The sequence may be pre-determined, e.g., by the user or by a service provider who then has to configure device 102, e.g., by supplying the set of URLs. The sequence may also be random, or partly random, from the perspective of the user as if it were a playlist of, e.g., mp3 audio files. The sequence is not determined by the topology imposed on the Web by the hyperlinks or URLs that link Web pages to one another. Preferably, the sequence is user-selected and is determined by his/her topical interests or other preferences.

The time period per page may be fixed in advance, e.g., by the user or a service provider, or may be made dependent on the characteristics of the Web page itself. As a result, the user is provided with a browsing sequence without the need for any user intervention in order to hop from one Web page to a next one independent of the Web's topology.
Accordingly, device 102 comprises a browser control module 124 that controls browser 112, and a configuration module 126, through which the rules can be set for control of browser 112. According to these rules, browser 112 accesses the Web pages associated with the pre-determined set of URLs in a specific or random order, and browser 112 shows a particular Web page for a pre-determined time period before showing a next Web page, etc. Device 102 further comprises a URL manager 128 for storing and supplying URLs, and for storing configuration data such as the order wherein the content information items, associated with the URLs, are rendered in UI 114 in a browsing sequence, and the particular time periods for presenting the items in UI 114. In the example shown, URL manager comprises a memory 130 for storage of the URLs and the associated configuration data. Memory 130 can be a solid state memory or a disk dedicated to the storage of the URLs of the browsing sequence and the configuration data. Alternatively, memory 130 is formed by an address space in a memory device present in device 102 that cooperates with a data processor (not shown) of electronic device 102 to implement other functionalities of device 102, e.g., a mobile telephone or a palmtop PC. Alternatively, memory 120 is part of a database in a storage (not shown) external to device 102 elsewhere in system 100, so that URL manager 128 is operative to retrieve from external storage and via data network 108 the set of URLs , or a selected one of multiple sets of URLs, optionally together with predetermined configuration data. Accordingly, if device 102 is operational in the sequential browsing mode, URL manager 128 provides to browser control module 124 the next URL for the sequence, and the data representative of the next presentation time period, when module 124 requests the next URL. Browser control module 124 issues commands to browser 112 such as "go to this URL", wherein "this URL" is fetched by browser control module 124 from URL manager 130. URL manager 130 can be queried for the list that contains the URLs to present to browser 112. URL manager 130 takes care of the proper sequence of the URLs. For interaction with the content information rendered in browser 112, the application program interface (API) of browser 112 needs to be used by browser control module 124. Interaction between browser control module 124 and browser 112 requires that data from the browser environment must be exchanged via an interface with module 124. The latter then determines the next action based on the data received from browser 112. The API is an Application Programmable Interface in, e.g., Internet Explorer, which can be used by the invention to exchange data with browser 112 or to program browser 112.

The time period over which an item is rendered in browser 112 can be a parameter in the function of browser control module 124 (i.e., can be fixed and the same for all items in the browsing sequence). Alternatively, URL manager 128 supplies to browser control module 124 the value of the length of the time period per item. This value then controls the moment at which browser control module 124 issues the command to browser 112 for rendering the item belonging to the associated URL.

In a low-bandwidth environment, browser control module can be configured to control browser 112 so as to have browser 112 fetch the next item, belonging to the next URL while browser 112 is still rendering the current item of the current URL in the sequence, and have browser 112 store it in a buffer (not shown) before rendering it when the time period of the current item has run out.

Preferably, the user can configure device 102, i.e., interact with module 126, via UI 114. Configuration operations include selection of the URLs for the sequential browsing, selection of the order of the sequential browsing, setting of the time period during which browser 112 displays an item in the sequence, organizing the URLs in one or more sets, each of which can be selected for the sequential browsing, etc. Preferably, the user can invoke a configuration screen in UI 114, e.g., through interaction with a hard-key or soft-key of device 102 for the dedicated operation of configuring. Alternatively, UI 114 permanently presents the user-control options for the browsing sequence in the invention. For example, UI 114 shows a "start" button, a "stop" button, a "configure" button, and an ""add" button for adding a URL to a browsing sequence or a set of URLs for the sequential browsing. The term "button" used herein covers the concepts of hard-keys (e.g., dedicated physical input keys made from plastic) and soft-keys (e.g., icons rendered in UI 114 that itself comprises a touch screen).

The parts of UI 114 for implementing the browsing sequence and configuration thereof, browser control module 124, configuration module 126 and URL manager 128 can be provided as an add-on (also referred to as an extension) to an existing browser such as Internet Explorer and Firefox. For example, if browser 112 is an Internet Explorer, the extension is built as an Active-X control module. As mentioned above, the API of browser 112 can be used for the interaction between browser control module 124 and browser 112. The extension preferably is capable of reading from browser 112, e.g., the size of the item fetched under control of the current URL in the browsing sequence and the number of images contained in the Web page if the item is a Web page. This enables the add-on to dynamically adjust or otherwise control browser 112 for the rendering time per item dependent on these parameters.

In a one embodiment, configuration module 126 enables the user to configure browser control module 124 via UI 114. For example, via URL manager 128 the user can manually collect URLs of certain Web pages, e.g., pages 116-112, in memory 130 and specify that device 102 operate in a certain mode to first show page 116 for one minute, then page 122 for half a minute, thereafter page 118 for one minute and a half, etc. For example, page 116 is the Web page of BBC news, page 122 is the Web page of CNN news, and page 118 is the Web page of BBC news dealing with science and nature. Through UI 114 and configuration module 126, the user may organize the URLs according to topic (e.g., news, pre-war Bentleys for sale, scientific magazines, etc.) and specify a sequence and time period per page per particular topic. The user may also specify that a sequence of pages per topic is random, or that the sequence is purely random with pages selected from various or all topics if he/she is particularly at leisure.

In another example, a service provider 132 or another party or a peer user provides one or more collections of URLs that can be stored in memory 130 at user device 102 via URL manager 130 and then be subjected to operations to implement a browsing sequence as described above. The operations (i.e., what pages to include in a sequence, and how long to display a specific page before loading a next page within a sequence) can also be specified by a service provider or another party through a file/list of URLs (or a script or another piece of software for downloading into control module 124 or URL manager 130), e.g., via data network 108.

In another embodiment, the jumping to a next Web page is not controlled by a timer, but is controlled instead by an active user input to device 102 such as pressing any key or a space bar in UI 114, or by a voice input or by imparting a certain movement on device when handheld, etc.

In still a further embodiment, UI 114 of device 102 comprises a hard-key, or soft key, or another input means (not shown) for entering a user input, in order to let the user pause the automatic browsing. Using the same key or the same input means, or another key or another input means, lets the sequential browsing resume. The timer in browser control module 124 is stopped upon the user input so that the sequential browsing is halted at the current Web page or at the current other item being rendered in browser 112. This feature enables the user, for example, to scroll through a Web page that is too large for being displayed in UI 114 in a legible format. The usual function of the scroll button is always available during the time the page is shown. This feature also enables the user to have the content information item, associated with the URL where the sequential browsing has paused, be rendered completely, i.e., before the timer has run out and triggers the browser to process the next URL of the set. This then is relevant in case the item comprises, for example, an audio clip or a video clip. Alternatively, the next URL can be made operational using a proper calculation, e.g., the next Web page is pre-fetched and then shown after a pre-determined number of seconds the previous page has been displayed, or a predetermined number of seconds after the audio clip or video clip has ended, etc.

In a variation on the theme of system 100, device 102 does not itself have a UI 114. Device 102 is then to be connected between another apparatus providing a UI, on the one hand, and network 108 on the other hand.

In a further embodiment, one or more lists of URLs for browsing sequences could be prepared by a dedicated service provider and be supplied from a server 132 upon a request from the user of device 102. For example, the user has subscribed to this service, and each time he/she has device 102 enter the browsing sequence mode, device 102 contacts server 132 via network 108 for retrieval of a list of URLs that are pointers to Web pages or other items specific to the interests of this particular user. In an example scenario, server 132 is maintained by the same service provider who supplies to the user the data of an electronic program guide (EPG). As known, an EPG service provides scheduling information of program broadcasts or of other content information transmissions that enables a user to select which of the broadcasts to watch or to record. The URLs of the sequence may be, for example, pointers to trailers of programs that fit the profile of this particular user and that will become available next week.

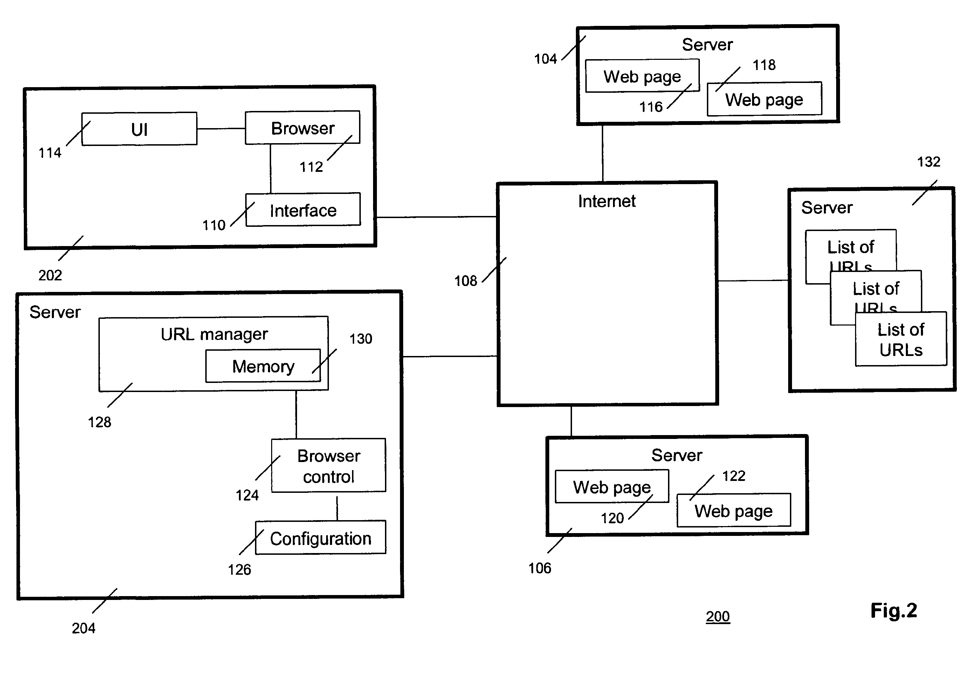

Fig.2 is a block diagram of a second data processing system 200 in the invention. With respect to system 100 of Fig.1, URL manager 128, memory 130, browser control module 124 and configuration module 126 have been accommodated at a separate server 204. The user of user device 202 configures browser control module 124 and interacts with URL manager 128 via UI 114 as described above. Instead of the configuration being physically carried out at device 202, the configuration is now delegated to server 204, wherein device 102 and server 202 cooperate via data network 108. System 200 thus has distributed functionalities, which enables a business model, wherein server 204 provides a user interface to the user of device 202 via which the user can select pre-determined sequences or can configure his/her personal sequence of URLs for the display of Web pages in UI 114. In the latter scenario, server 204 stores the relevant URLs and display modes (what pages to put into what sequence or set, in what order and for how long to display a specific page) per individual one of multiple users having subscribed to this service. In system 200, device 202 can be a conventional data processing device having browser 112, UI 114 and access to data network 110 via interface 110. Again, other service providers 132 or peers to the user of device 202 may supply or recommend sequences of Web pages for being used in a browsing sequence implemented at server 204. Note that server 204 may be implemented by a device similar to device 102 so as to support an online community in a peer-to-peer fashion. Within this context, reference is made to the Website "Del.icio.us" which provides a social bookmarking Web service for storing, sharing and discovering Web bookmarks. Users can tag their bookmarks using any keywords. One can search for all bookmarks containing tags with a specific keyword.

In a further embodiment (not shown), memory 128 and configuration module 126 are accommodated at user device 202, whereas browser control module 124 and URL manager 130 reside at server 204. Configuration is then completely under control of the user, and the operational use of browser 112 in browsing sequence mode is under control of the service provider maintaining server 204. Accordingly, the functionalities implementing the invention may be distributed among several pieces of hardware that cooperate via data network 108.

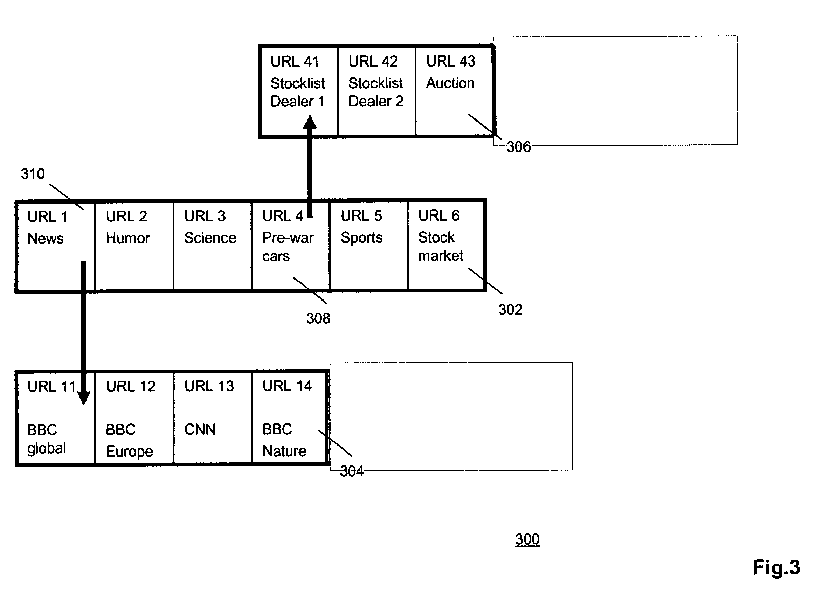

Fig.3 is a diagram illustrating the operation of the sequential browsing in the invention when using multiple sets of URLs 302, 304 and 306 personalized by, or for, a particular user of device 102. If the user lets device 102 enter the sequential browsing mode, browser 112 first sequences through set 302. In the example, browser 112 first renders the Web page of URL 1 for a first time period, then renders the Web page of URL 2 for a second time period and so on, until the sixth time period of the page belonging to URL 6 has elapsed. Browser 112 then stops the sequential browsing or returns to URL 1 so that the browsing proceeds in a round-robin fashion. Assume now that browser 112 is proceeding through the sequence of set (or list) 302 and is rendering page 308 of URL 4 ("pre-war cars"). Page 308 may have been chosen so as to be representative of this particular topic: the home page of a club of pre-war-car owners, or the home page of this user's favorite pre-war car parts dealer, etc. At this moment, the user is in the mood to browse further Web pages belonging to this topic of pre-war cars. Upon a user input to device 102, URL manager 128 branches off to set 306, that specifically includes URLs of Web pages that this user perceives as being related to the topic "pre-war cars". Browser control module receives a URL of set 306 (e.g., URL 41 or URL 42 depending on the browsing mode such as, sequentially, cyclically, randomly) and controls browser 112 to proceed the sequential (or cyclical or random) browsing, but limited to set (or list) 306 that lets the user briefly scan the current stock-lists of two specific dealers at URLs 41 and 42, and the cars that are going to be auctioned at the auction associated with URL 43. Time periods per Web page of list 306 may be made dependent on the size or the page or the images available, etc. After the user is done with the sequential browsing of list 306 and if he/she does not desire to leave the sequential browsing mode, he/she gives a particular user input to device 102 whereupon URL manager 128 returns to list 302, and consequently browser control module 124 has browser 112 return to list 302. Similarly, when the sequential browsing of list 302 triggers the user to scan more news pages than page 310 of URL 1, a specific user input in this phase, wherein page 310 is being rendered, controls browser 112 to proceed the sequential browsing with set or list 304. A toggle input may then let browser 112 return to main list 302 as discussed with respect to the processing of list 306.

The components of systems 100 and 200 described above can be implemented using software running on a general-purpose data processor, a dedicated pre-programmed data processor, or any suitable combination of hardware and software implementations.

## Claims

1. An electronic device (102) comprising an interface (110) for data communication via a data network (108), and a browser (112) for rendering content information items provided by one or more servers (104, 106) on the data network, wherein:
different ones of the content information items are identifiable through different URLs;
the device has a control system (124, 128, 130) for control of the browser;
the control system is operative to cause the browser to retrieve multiple specific ones of the items under control of a set of URLs;
the set of URLs is determined in advance and is independent of the topology of the Web;
the control system is operative to implement an automatic sequential browsing functionality by means of automatically supplying to the browser commands one after another to render the specific items one after another in a user interface (114).

2. The device of claim 1, wherein at least a particular URL of the set of URLs has been programmed into the device by a supplier of the device.

3. The device of claim 1 or 2, wherein at least one of the following aspects of the control system is configurable: respective time periods for rendering respective ones of the specific items; the sequence wherein the specific items are rendered; and the set of URLs.

4. The device of claim 3, wherein the control means is user-configurable through the user interface.

5. The device of claim 3, wherein the control means is configurable via the interface for data communication via the network.

6. The device of claim 3, wherein configuring the control system is independent of editing a bookmarks folder of the browser.

7. The device of claim 1, 2, 3, 4, 5 or 6, wherein the control means has an operational mode wherein a respective time period of rendering a respective one of specific items depends on a respective attribute of the respective specific item.

8. The device of claim 7, wherein the attribute comprises at least one of the following: a size of a respective electronic data file representative of the respective specific item; a number of images contained in the respective specific item; a ratio of a first area of text versus a second area of images of the respective item when displayed; a presence of one or more keywords present in the respective specific item and matching a pre-determined user profile.

9. The device of claim 1, wherein:
the control system is operative to cause the browser to retrieve multiple further specific ones of the items (304, 306) under control of a further set of further URLs;
the further set of further URLs is determined in advance and is independent of the topology of the Web;
the control system is operative to implement an automatic sequential browsing functionality by means of automatically supplying to the browser further commands to render the further specific items automatically one after another in a user interface (114), upon receiving a user input while the specific items are being rendered one after another.

10. The device of claim 9, wherein the further set of further URLs depends on a particular one of the specific items (308, 310) being rendered when the device receives the user input

11. A method of providing a service via a data network (108) to an electronic device (102) comprising an interface (110) for data communication via the data network and a browser (112) for rendering content information items provided by one or more servers (104, 106) on the data network, wherein:
different ones of the content information items are identifiable through different URLs;
the method comprises providing a set of URLs to the device;
the method comprises controlling the browser to retrieve multiple specific ones of the items under control of the set of URLs;
the set of URLs is determined in advance and is independent of the topology of the Web;
the controlling comprises implementing an automatic sequential browsing functionality by means of automatically supplying to the browser commands one after another to render the specific items one after another in a user interface (114).

12. The method of claim 11, wherein at least one of the following aspects of the controlling is configurable: respective time periods for rendering respective ones of the specific items; the sequence wherein the specific items are rendered; and the set of URLs.

13. The method of claim 12, wherein the controlling is user-configurable through the user interface and the interface for data communication.

14. The method of claim 11, 12 or 13, wherein the controlling has an operational mode wherein a respective time period of rendering a respective one of specific items depends on a respective attribute of the respective specific item.

15. The method of claim 14, wherein the attribute comprises at least one of the following: a size of a respective electronic data file representative of the respective specific item; a number of images contained in the respective specific item; a ratio of a first area of text versus a second area of images of the respective item when displayed in the user interface; a presence of one or more keywords present in the respective specific item and matching a pre-determined user profile.

16. The method of claim 11, wherein:
the controlling comprises providing a further set of further URLs;
the further set of further URLs is determined in advance and is independent of the topology of the Web;
the controlling comprises causing the browser to retrieve multiple further specific ones of the items (304, 306) under control of the further set of the further URLs;
the controlling comprises implementing the automatic sequential browsing functionality by means of supplying to the browser further commands to render the further specific items automatically one after another in a user interface (114), upon the device receiving a user input while the specific items are being rendered one after another.

17. The method of claim 16, wherein the further set of further URLs depends on a particular one of the specific items (308, 310) being rendered when the device receives the user input.

18. Software for installing on an electronic device (102) comprising an interface (110) to a data network (108) and comprising a browser (112) for rendering content information items provided by one or more servers (104, 106) on the data network, wherein:
different ones of the content information items are identifiable through different URLs;
the software comprises first control instructions for retrieving a set of URLs;
the software comprises second control instructions for the browser to retrieve multiple specific ones of the items under control of the set of URLs;
the set of URLs is determined in advance and is independent of the topology of the Web;
the software comprises third control instructions for implementing an automatic sequential browsing functionality by means of automatically supplying to the browser commands one after another to render the specific items one after another in a user interface (114).

19. The software of claim 18, wherein at least one of the following aspects of the first, second or third control instructions is configurable: respective time periods for rendering respective ones of the specific items; the sequence wherein the specific items are rendered; and the set of URLs.

20. The software of claim 18, wherein at least the first, second or third control instructions are user-configurable through a user interface or through the interface for data communication.

21. The software of claim 18, 19 or 20, wherein at least the first, second or third control instructions control an operational mode of the device, wherein a respective time period of rendering a respective one of specific items depends on a respective attribute of the respective specific item.

22. The software of claim 21 , wherein the attribute comprises at least one of the following: a size of a respective electronic data file representative of the respective specific item; a number of images contained in the respective specific item; a ratio of a first area of text versus a second area of images of the respective item when displayed in the user interface; a presence of one or more keywords present in the respective specific item and matching a pre-determined user profile.

23. The software of claim 18, wherein:
the software comprises fourth control instructions for retrieving a further set of further URLs;
the further set of further URLs is determined in advance and is independent of the topology of the Web;
the software comprises fifth control instructions for causing the browser to retrieve multiple further specific ones of the items (304, 306) under control of the further set of the further URLs;
the software comprises sixth control instructions for implementing the automatic sequential browsing functionality by means of supplying to the browser further commands to render the further specific items automatically one after another in the user interface (114), upon the device receiving a user input while the specific items are being rendered one after another.

24. The method of claim 23, wherein the further set of further URLs depends on a particular one of the specific items (308, 310) being rendered when the device receives the user input.
